(19) Europäisches Patentamt
European Patent Office
Office européen des brevets

(11) Publication number: 0 084 253 B1

(12) # EUROPEAN PATENT SPECIFICATION

(45) Date of publication of patent specification: 01.10.86

(51) Int. Cl.[4]: A 01 N 25/32 // A01N43/36, A01N25/28, A01N25/08

(21) Application number: 82306906.7

(22) Date of filing: 23.12.82

(54) **Antidotes for pyrrolidone herbicides and herbicide antidote compositions.**

(30) Priority: 30.12.81 US 335788
30.12.81 US 335789
30.12.81 US 335950
30.12.81 US 335949

(43) Date of publication of application:
27.07.83 Bulletin 83/30

(45) Publication of the grant of the patent:
01.10.86 Bulletin 86/40

(84) Designated Contracting States:
AT BE CH DE FR GB IT LI NL SE

(56) References cited:
EP-A-0 008 684
US-A-3 959 304
US-A-4 210 589
US-A-4 276 078

The file contains technical information submitted after the application was filed and not included in this specification

(73) Proprietor: STAUFFER CHEMICAL COMPANY
Westport Connecticut 06880 (US)

(72) Inventor: Green, Laddie Lee
4345 Sherbourne Drive
San Jose California 95124 (US)
Inventor: Duerksen, Charles John
31588 Road 144
Visalia California 93277 (US)
Inventor: Rodriquez, Benjamin Pagurayan
1532 South Woodland Drive
Visalia California 93277 (US)

(74) Representative: Smith, Sydney et al
Elkington and Fife High Holborn House 52/54
High Holborn
London WC1V 6SH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to antidotes for pyrrolidone herbicides, to herbicide antidote compositions and to a method for the control of vegetation using such compositions and, more particularly to the following four antidotes: N-ethyl-N-benzyldichloroacetamide; N,N-diallyldichloroacetamide; 2,2,5-trimethyl-3-(dichloroacetyl)oxazolidine; and 2,2,2-trifluoroethyl-N-p-chlorophenylcarbamate.

A herbicide is a compound which controls or modifies plant growth, e.g., killing, retarding, defoliating, desiccating, regulating, stunting, tillering, stimulating, and dwarfing. The term "plant" refers to all physical parts of a plant, including seeds, seedlings, saplings, roots, tubers, stems, stalks, foliage, and fruits. "Plant growth" includes all phases of development from seed germination to natural or induced cessation of life.

Herbicides are generally used to control or eradicate weed pests. They have gained a high degree of commercial success because it has been shown that such control can increase crop yield and reduce harvesting costs.

The most popular methods of herbicide application include: pre-plant incorporation into the soil; in-furrow application to seeds and surrounding soil; pre-emergence surface treatment of seeded soil; and post-emergence treatment of the plant and soil.

A manufacturer of a herbicide generally recommends a range of application rates and concentrations calculated to maximize weed control. The range of rates varies from approximately 0.01 to 50 pounds per acre (0.0112 to 56 kilograms per hectare (k/ha)), and is usually in the range of from 0.1 to 25 pounds per acre (0.112 to 28 k/ha). The term "herbicidally effective amount" describes the amount of a herbicide compound which controls or modifies plant growth. The actual amount used depends upon several considerations, including particular weed susceptibility and overall cost limitations.

The most important factor influencing the usefulness of a given herbicide is its selectivity towards crops. In some cases, a beneficial crop is susceptible to the effects of the herbicide. In addition, certain herbicidal compounds are phytotoxic to some weed species but not to others. To be effective, a herbicide must cause minimal damage (preferably no damage) to the beneficial crop while maximizing damage to weed species which plague that crop.

Depending on the particular formulation used, the pyrrolidone herbicide compounds of this invention have either of two different effects on crops and weeds. When a pyrrolidone compound is formulated as an emulsifiable concentrate and applied, bleaching of the crop occurs in the early stages of growth. Bleaching is due to loss of pigmentation in a plant and is seen as a yellowing of the plant's leaves.

When a pyrrolidone compound is formulated as a microcapsule, bleaching of the crop is significantly lessened. However, weed control is also reduced.

To preserve the beneficial aspects of herbicide use, i.e., to maximize weed control, and to minimize crop damage, many herbicide antidotes have been prepared. These antidotes reduce or eliminate damage to the crop while maintaining or increasing the damage effect of the herbicide on weed species; See, for example, U.S. Patent Nos. 3,959,304; 4,021,224 and 4,021,229 and Belgian Patent No. 846,894.

The precise mechanism by which an antidote reduces herbicidal crop injury has not been established. An antidote compound may be a remedy, interferent, protectant, or antagonist. As used herein, "antidote" describes a compound which has the effect of establishing herbicide selectivity, i.e., continued herbicidal phytotoxicity to weed species and reduced or non-phytotoxicity to cultivated crop species. The term "antidotally effective amount" describes the amount of an antidote compound which counteracts a phytotoxic response of a beneficial crop to a herbicide.

Description of the Invention

The following compounds have now been discovered to be effective antidotes for pyrrolidone herbicide injury to a wide variety of crops:

1. N-ethyl-N-benzyldichloroacetamide having the formula

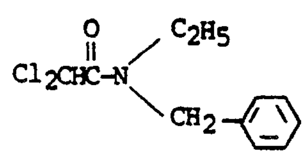 ;

2. 2,2,2-trifluoroethyl-N-p-chlorophenylcarbamate having the formula

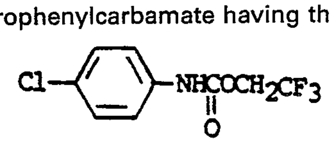 ;

3. N,N-diallyl-dichloroacetamide having the formula

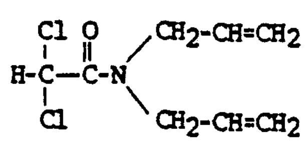 ;

and

4. 2,2,5-trimethyl-3-(dichloroacetyl)-oxazolidine having the formula

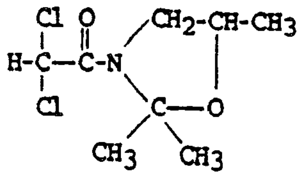 .

This invention embodies a two-part herbicidal system comprising:

(a) a herbicidally effective amount of a pyrrolidone compound of the formula

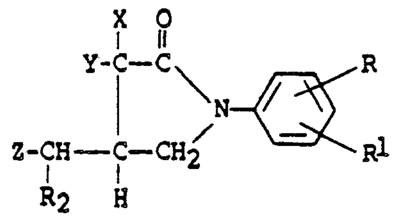

in which

X is hydrogen, chlorine or methyl;

Y is hydrogen, chlorine or bromine;

Z is chlorine or bromine;

R is hydrogen, alkyl having 1 to 4 carbon atoms, inclusive, acetyl, chlorine, bromine, fluorine, iodine, trifluoromethyl, nitro, cyano, alkoxy having 1 to 4 carbon atoms, inclusive, alkylthio having 1 to 4 carbon atoms, inclusive, alkylsulfinyl having 1 to 4 carbon atoms, inclusive, alkylsulfonyl having 1 to 4 carbon atoms, inclusive, trifluoromethylthio, trifluoromethylsulfinyl, trifluoromethylsulfonyl, pentafluoropropionamido, or 3-methylureido;

$R_1$ is hydrogen, alkyl having 1 to 4 carbon atoms, inclusive, chlorine or trifluoromethyl; and,

$R_2$ is alkyl having 1 to 4 carbon atoms, inclusive, or hydrogen; and,

(b) a non-phytotoxic antidotally effective amount of a compound having one of the following formulas:

1(b) 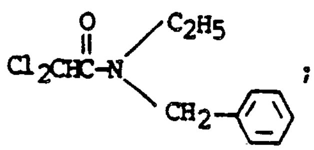 ; 2(b) 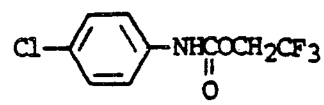 ;

3(b) 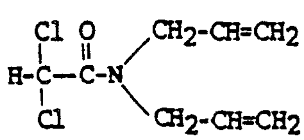 ; or 4(b) 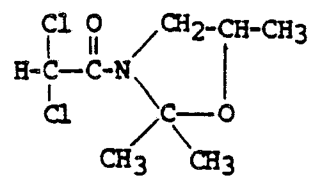 .

In a preferred embodiment, X is hydrogen, Y is chlorine, Z is chlorine, R is m-trifluoromethyl, $R_1$ is hydrogen and $R_2$ is hydrogen.

This invention also includes the method of controlling undesirable vegetation and at the same time reducing herbicidal crop injury due to a pyrrolidone herbicide which comprises applying to the locus where control is desired a composition comprising:

(a) a herbicidally effective amount of a pyrrolidone compound of the formula

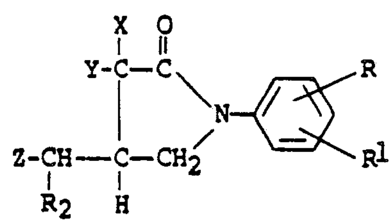

in which

X is hydrogen, chlorine or methyl;

Y is hydrogen, chlorine or bromine;

Z is chlorine or bromine;

R is hydrogen, alkyl having 1 to 4 carbon atoms, inclusive, acetyl, chlorine, bromine, fluorine, iodine, trifluoromethyl, nitro, cyano, alkoxy having 1 to 4 carbon atoms, inclusive, alkylthio having 1 to 4 carbon atoms, inclusive, alkylsulfinyl having 1 to 4 carbon atoms, inclusive, alkylsulfonyl having 1 to 4 carbon atoms, inclusive, trifluoromethylthio, trifluoromethylsulfinyl, trifluoromethylsulfonyl, pentafluoropropionamido, or 3-methylureido;

$R_1$ is hydrogen, alkyl having 1 to 4 carbon atoms, inclusive, chlorine or trifluoromethyl; and,

$R_2$ is alkyl having 1 to 4 carbon atoms, inclusive, or hydrogen; and,

(b) is a non-phytotoxic antidotally effective amount of a compound having one of the following formulas:

1(b) 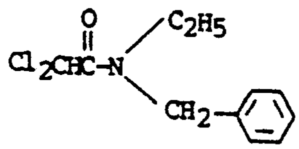 ; 2(b) 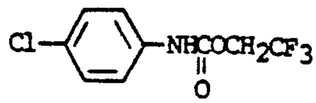 ;

3(b) 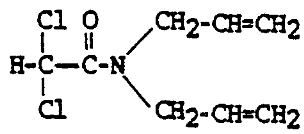 ; or 4(b) 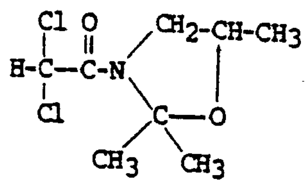 .

The locus where herbicidal selectivity is desired may include soil, seeds, seedlings and vegetation.

Preparation

The pyrrrolidone compounds of the present invention can be prepared by the procedures described in U.S. Patent No. 4,110,105.

The N-ethyl-N-benzyldichloroacetamide compound of this invention may be prepared according to the following procedure. Fourteen and two-tenths grams (14.2 g) (0.105 mole) of N-benzyl-N-ethylamine, 4.0 g (0.1 mole) of sodium hydroxide, 50 milliliters (ml) of water and 100 ml of methylene chloride were added to a reaction flask. Fourteen and seven-tenths g of 2,2-dichloroacetyl chloride were added dropwise with dry ice cooling over a period of 3 minutes. Cooling was removed and the mixture was stirred for an additional 18 minutes.

The reaction mixture was separated and the organic phase was washed twice with dilute hydrochloric acid, twice with 5% sodium carbonate, dried over magnesium sulfate and stripped over water pump vacuum to yield 21.9 g of 2,2-dichloro-N-ethyl-N-benzylacetamide (residual liquid). $n_D^{30} = 1.5449$. Structure was confirmed by infrared spectroscopy.

The trifluoromethyl p-chlorophenylcarbamate compound of this invention may be prepared according to the following procedure.

Two and one-half grams (2.5 g) (0.025 mole) of 2,2,2-trifluoroethanol, 25 milliliters (ml) of trichloromethane, 3.8 g (0.025 mole) of p-chlorophenylisocyanate, 3 drops of triethylamine and 1 drop of dibutyl tin dilaurate were combined, stirred at room temperature for 15 minutes, refluxed for two hours, cooled and evaporated. Yield was 6.1 g of 2,2,2-trifluoroethyl p-chlorophenyl carbamate. m.p. = 54—57°C. Structure was confirmed by infrared spectroscopy.

The N,N-diallyl dichloroacetamide compound of this invention may be prepared according to the following procedure. Three and seven-tenths grams (3.7 g) (0.025 mole) of dichloroacetyl chloride were dissolved in 100 milliliters (ml) of dichloromethane and cooled to 5°C in an ice bath. Four and nine-tenths g (4.9 g) (0.05 mole) of diallylamine were added slowly, and the temperature was maintained at about 10°C.

The reaction mixture was stirred at room temperature for four hours, washed twice with water, dried over magnesium sulfate, filtered and stripped. Yield was 4.0 g of diallyl dichloroacetamide. $n_D^{30} = 1.4990$. Structure was confirmed by infrared and nuclear magnetic resonance spectroscopy.

The 2,2,5-trimethyl-3-(dichloroacetyl)-oxazolidine compound of the invention can be prepared according to the procedures described in U.S. Patent No. 3,959,304.

Testing

A stock solution of the pyrrolidone was prepared by diluting the requisite amount of the herbicide in water or in an acetone-water solution. Examples of solution compositions and application rates are summarized in Table I.

TABLE 1
Herbicide Stock Solutions

| Herbicide Name | Composition Herbicide (mq)* | Water (ml) | Acetone (ml) | Application ml/flat** | lb/acre | kg/ha |
|---|---|---|---|---|---|---|
| 1-m-tri-fluoro-methyl-phenyl-3-chloro-4-chloromethyl-2-pyrrolidone | 781 | 100 | — | 2.67 | 1.25 | 1.4 |
| | 122 | 20 | 20 | 2.73 | 0.5 | 0.56 |

*The weight is measured in terms of mg of a 2E formulation of the herbicide, that is, 2 lb of active ingredient per gallon of liquid formulation (0.24 kg/l).
**The flats measure 5.95 inches by 9.5 inches (15.11 cms by 24.13 cms). Approximately four (4) mg/flat is equal to one (1) lb/acre (1.12 kg/ha).

In all cases, the herbicide was applied to the surface of the soil after planting the seeds and prior to emergence of the plants, that is, by pre-emergence surface application. The herbicide is sprayed on the soil either in a tank-mix with the antidote or alone after pre-emergence surface application, pre-plant incorporation or in-furrow application of the antidote.

Stock solutions of the above-named antidote compounds were prepared at the desired concentrations by diluting the requisite amount in acetone or in an acetone-water solution. Examples of solution compositions, rates and application methods are summarized in Table II.

TABLE II
Antidote Stock Solutions

| Composition Antidote* (mg) | Acetone (ml) | Water (ml) | Application ml/flat | lb/acre | kg/ha | Method |
|---|---|---|---|---|---|---|
| 95 | 15 | — | 0.30 | 1.00 | 1.12 | IF** |
| 95 | 15 | — | 1.50 | 5.00 | 5.6 | IF |
| 60 | 20 | 20 | 2.67 | 1.00 | 1.12 | PES*** |
| 300 | 20 | 20 | 2.67 | 5.00 | 5.6 | PES |

*Antidote is at technical grade.
**IF = IN-furrow surface application of antidote.
***PES = Pre-emergent surface application.

The antidote solution were applied to the soil either by in-furrow surface application by pre-plant incorporation or by pre-emergence surface application using an atomizer or a linear spray table.

For in-furrow application, a 1 pint (473 cubic centimeters (cc)) sample of soil containing the previously incorporated herbicide was removed and retained from each planting flat. After leveling and furrowing the soil, seeds of the crop or weed species were planted ½ inch deep (1.27 centimeter). Each flat was divided in half by a wooden barrier. A stock solution of the antidote was atomized directly onto the exposed seeds and soil in the open furrow on one side of the barrier. The seeds in the entire flat were then covered with the previously removed soil. The antidotally untreated sections of flats were compared for observed differences which would indicate lateral movement of the antidote through the soil.

A few of the antidotes in the following tests were combined with the soil prior to planting the seeds. Such application is called preplant incorporation. Stock solutions of the antidote were injected into the soil in a 5-gallon (~19 l) cement mixer and mixed in proportions necessary to achieve the desired rates. The soil with the antidote was then transferred to flats, leveled and furrowed into rows 1/2 inch (1.27 cm) deep. Enough seeds were planted to obtain good stands in each treatment. The seeds were then covered with the antidote treated soil.

Control flats contained crops treated with herbicide only. All flats were placed on greenhouse benches where temperature was maintained between 70 and 90°F (21.1 to 32.2°C). The flats were watered by sprinkling as needed to assure good plant growth.

All of the soil used in the tests described herein was loamy sand soil treated with 50 parts per million (ppm) each of a commercially available fungicide, N-[(trichloromethyl)-thiol]-4-cyclohexane-1,2-dicarboximide, and 18-18-18 fertilizer, which contains 18% by weight equivalent each of nitrogen, phosphorus pentoxide, and potassium oxide.

Injury ratings were taken four week after application of the antidote. The effectiveness of the antidote was determined by visual comparison of crop injury which occurred in the test flats to that which occurred in the control flats.

The treated crops initially screened for diminution of herbicidal injury were milo, wheat, cotton, rice, barley, corn and soybeans. The compounds were also tested on weed species. The weed species tested included watergrass (*Echinochloa crusgalli*), foxtail (*Setaria viridis*), wild oat (*Avena fatua*) and mustard (*Brassica spp.*)

KEYS TO TABLES III, IV, V, VI, VII, VIII, IX AND X

Herbicides

1-m-Trifluoromethylphenyl-3-chloro-4-chloromethyl-2-pyrrolidone

N-m-Cyanophenyl-3-chloro-4-chloromethyl-pyrrolidone-2

Application Methods

IF = In-furrow surface application of antidote (soil subsequently treated with herbicide only).

PPI = Pre-plant incorporation of the antidote.

PES = Pre-emergence surface application of herbicide or antidote.

TM = Tank-mixed solution of herbicide and antidote.

If no antidote was applied, the word "none" appears in the Antidote Rate column. The results shown on this line are the percent injuries sustained by each of the crops when treated with the herbicide only at the rate specified.

All rates shown, for both herbicide and antidote, are in pounds per acre (kilograms per hectare).

Injury Ratings

The injury to the crops (Tables III, V, VII, and XI) or weeds (Tables IV, VI, VIII and X) is shown as a percentage of damage done to the plants as compared to an evaluation of the overall undamaged state of the plants. The damage done to the plants is a function of the number of plants injured and the extent of injury to each plant. The rating is made four (4) weeks after application of the herbicide alone or of the herbicide in combination with the antidote.

An asterisk (*) in Tables III, V, VII, and IX indicates that the antidote compound is active in reducing herbicidal injury to the crop.

Tables IV, VI, VIII and X show that the antidote compounds tested have no effect on weeds, i.e., herbicidal injury to the weeds is sustained even in the presence of the antidote compound.

TABLE III
Antidotal Effectiveness of N-Ethyl-N-benzyldichloroacetamide

| Herbicide Name | Rate | Antidote Rate | Antidote Method | Milo % Inj | Wheat % Inj | Cotton % Inj | Rice % Inj | Barley % Inj | Corn % Inj | Soybean % Inj |
|---|---|---|---|---|---|---|---|---|---|---|
| 1-m-trifluoromethyl- | 1.00 (1.12) | none | — | | 55 | 15 | 90 | 80 | | |
| phenyl-3-chloro- | 1.00 (1.12) | 5.00 (5.6) | IF | | *40 | 15 | 90 | 80 | | |
| 4-chloromethyl- | | | | | | | | | | |
| 2-pyrrolidone | 0.50 (0.56) | none | — | 10 | | | | | 30 | 60 |
| | 0.50 (0.56) | 5.00 (5.6) | IF | 10 | | | | | *20 | 60 |
| | 0.50 (0.56) | none | — | | | | | | 90 | |
| | 0.50 (0.56) | 1.00 (1.12) | IF | | | | | | *40 | |
| | 0.50 (0.56) | 5.00 (5.6) | IF | | | | | | *35 | |
| | 0.50 (0.56) | none | — | | | | | | 65 | |
| | 0.50 (0.56) | 1.00 (1.12) | PES | | | | | | *10 | |
| | 0.50 (0.56) | 2.00 (2.24) | PES | | | | | | *15 | |
| | 0.50 (0.56) | 5.00 (5.6) | PES | | | | | | *20 | |
| | 0.50 (0.56) | none | — | | | | | | 55 | |
| | 0.50 (0.56) | 1.00 (1.12) | IF | | | | | | *20 | |
| | 0.50 (0.56) | 5.00 (5.6) | IF | | | | | | *10 | |
| | 0.50 (0.56) | none | — | | | | | | 55 | |
| | 0.50 (0.56) | 1.00 (1.12) | PES | | | | | | *20 | |
| | 0.50 (0.56) | 5.00 (5.6) | PES | | | | | | *0 | |

TABLE III (continued)

| Herbicide Name | Rate | Antidote Rate | Antidote Method | Milo % Inj | Wheat % Inj | Cotton % Inj | Rice % Inj | Barley % Inj | Corn % Inj | Soybean % Inj |
|---|---|---|---|---|---|---|---|---|---|---|
| 1-m-trifluoromethyl-phenyl-3-chloro-4-chloromethyl-2-pyrrolidone | 1.00 (1.12) | none | — | | 100 | 50 | 100 | 100 | | |
| | 1.00 (1.12) | 5.00 (5.6) | IF | | 100 | 50 | 100 | 100 | | |
| | 0.50 (0.56) | none | — | 100 | | | | | 100 | 100 |
| | 0.50 (0.56) | 5.00 (5.6) | IF | 100 | | | | | *50 | 100 |
| | 0.50 (0.56) | none | — | | | | | | 90 | |
| | 0.50 (0.56) | 1.00 (1.12) | IF | | | | | | *40 | |
| | 0.50 (0.56) | 5.00 (5.6) | IF | | | | | | *35 | |
| | 1.00 (1.12) | none | — | | 55 | 15 | 90 | 80 | | |
| | 1.00 (1.12) | 5.00 (5.6) | IF | | *40 | 15 | 90 | *75 | | |
| | 0.50 (0.56) | none | — | 10 | | | | | 30 | 60 |
| | 0.50 (0.56) | 5.00 (5.6) | IF | 10 | | | | | *20 | 60 |
| | 0.50 (0.56) | none | — | | | | | | 65 | |
| | 0.50 (0.56) | 1.00 (1.12) | PES | | | | | | *10 | |
| | 0.50 (0.56) | 2.00 (2.24) | PES | | | | | | *15 | |
| | 0.50 (0.56) | 5.00 (5.6) | PES | | | | | | *20 | |

TABLE III (continued)

| Herbicide Name | Rate | Antidote Rate | Antidote Method | Milo % Inj | Wheat % Inj | Cotton % Inj | Rice % Inj | Barley % Inj | Corn % Inj | Soybean % Inj |
|---|---|---|---|---|---|---|---|---|---|---|
| 1-m-trifluoromethyl-phenyl-3-chloro-4-chloromethyl-2-pyrrolidone | 0.50 (0.56) | none | — | | | | | | 55 | |
| | 0.50 (0.56) | 1.00 (1.12) | IF | | | | | | *20 | |
| | 0.50 (0.56) | 5.00 (5.6) | IF | | | | | | *10 | |
| | 0.50 (0.56) | none | — | | | | | | 55 | |
| | 0.50 (0.56) | 1.00 (1.12) | PES | | | | | | *25 | |
| | 0.50 (0.56) | 5.00 (5.6) | PES | | | | | | *0 | |
| | 1.00 (1.12) | none | — | | 70 | 45 | 60 | 100 | | |
| | 1.00 (1.12) | 5.00 (5.6) | IF | | *60 | 45 | 60 | 100 | | |
| | 0.50 (0.56) | none | — | 30 | | | | | 50 | 60 |
| | 0.50 (0.56) | 5.00 (5.6) | IF | *20 | | | | | *20 | 60 |
| | 1.25 (1.4) | none | — | | 60 | | 60 | 60 | | |
| | 1.25 (1.4) | 5.00 (5.6) | IF | | 60 | | 60 | 60 | | |
| | 0.75 (0.84) | none | — | 85 | | | | | 65 | |
| | 0.75 (0.84) | 5.00 (5.6) | PES | *40 | | | | | *20 | |

TABLE IV
Herbicidal Effectiveness
Antidote: N-Ethyl-N-benzyl-dichloroacetamide

| Herbicide | Rate | Antidote Rate | Antidote Method | Water-grass | Fox-tail | Wild Oat | Mustard |
|---|---|---|---|---|---|---|---|
| 1-m-trifluoro-methylphenyl-3-chloromethyl-2-pyrrolidone | 0.50 (0.56) | none | — | 100 | | | 100 |
| | 0.50 (0.56) | 1.00 (1.12) | IF | 100 | | | 100 |
| | 0.50 (0.56) | 5.00 (5.6) | IF | 100 | | | 100 |
| | 0.50 (0.56) | none | — | | 100 | | 100 |
| | 0.50 (0.56) | 1.00 (1.12) | PES | | 100 | | 100 |
| | 0.50 (0.56) | 2.00 (2.24) | PES | | 100 | | 100 |
| | 0.50 (0.56) | none | — | 100 | | | 100 |
| | 0.50 (0.56) | 1.00 (1.12) | IF | 100 | | | 100 |
| | 0.50 (0.56) | 5.0 (5.6) | IF | 100 | | | 100 |
| | 0.50 (0.56) | none | — | 100 | 100 | 90 | 100 |
| | 0.50 (0.56) | 1.00 (1.12) | PES | 100 | 100 | 90 | 100 |
| | 0.50 (0.56) | 5.00 (5.6) | PES | 100 | 100 | 90 | 100 |
| | 0.50 (0.56) | none | — | | | | 100 |
| | 0.50 (0.56) | 5.00 (5.6) | IF | | | | 100 |
| | 0.50 (0.56) | none | — | 100 | | | 100 |
| | 0.50 (0.56) | 1.00 (1.12) | IF | 100 | | | 100 |
| | 0.50 (0.56) | 5.00 (5.6) | IF | 100 | | | 100 |
| | 0.50 (0.56) | none | — | | 100 | | 100 |
| | 0.50 (0.56) | 1.00 (1.12) | PES | | 100 | | 100 |
| | 0.50 (0.56) | 2.00 (2.24) | PES | | 100 | | 100 |
| | 0.50 (0.56) | 5.00 (5.6) | PES | | 100 | | 100 |

TABLE IV (continued)
Herbicidal Effectiveness
Antidote: N-Ethyl-B-benzyl-dichloroacetamide

| Herbicide | Rate | Antidote Rate | Antidote Method | Water-grass | Fox-tail | Wild Oat | Mustard |
|---|---|---|---|---|---|---|---|
| 1-m-trifluoro-methyl-phenyl-3-chloromethyl-2-pyrrolidone | 0.50 (0.56) | none | — | 100 | | | 100 |
| | 0.50 (0.56) | 1.00 (1.12) | IF | 100 | | | 100 |
| | 0.50 (0.56) | 5.00 (5.6) | IF | 100 | | | 100 |
| | 0.50 (0.56) | none | — | 100 | 100 | 90 | 100 |
| | 0.50 (0.56) | 1.00 (1.12) | PES | 100 | 100 | 90 | 100 |
| | 0.50 (0.56) | 5.00 (5.6) | PES | 100 | 100 | 90 | 100 |
| | 0.50 (0.56) | none | — | | | | 90 |
| | 0.50 (0.56) | 5.00 (5.6) | IF | | | | 90 |
| | 0.75 (0.84) | none | — | | | | 100 |
| | 0.75 (0.84) | 5.00 (5.6) | PES | | | | 100 |

TABLE V
Antidotal Effectiveness of 2,2,2-Trifluoroethyl-N-p-chlorophenyl carbamate

| Herbicide Name | Rate | Antidote Rate | Method | Milo % Inj | Wheat % Inj | Cotton % Inj | Rice % Inj | Barley % Inj | Corn % Inj | Soybean % Inj |
|---|---|---|---|---|---|---|---|---|---|---|
| 1-m-trifluoromethyl- | 1.25 (1.4) | none | — | | 100 | 70 | 100 | 100 | | |
| phenyl-3-chloro- | 1.25 (1.4) | 5.00 (5.6) | IF | | *35 | *60 | *85 | *70 | | |
| 4-chloromethyl- | | | | | | | | | | |
| 2-pyrrolidone | 1.00 (1.12) | none | — | 85 | 80 | | 85 | | | |
| | 1.00 (1.12) | 5.00 (5.6) | PES | *20 | *10 | | *0 | | | |
| | 0.50 (0.56) | none | — | 90 | | | | | 75 | 65 |
| | 0.50 (0.56) | 5.00 (5.6) | IF | *65 | | | | | *65 | 65 |
| | 1.25 (1.4) | none | — | | 90 | 65 | 98 | 10 | | |
| | 1.25 (1.4) | 5.00 (5.6) | IF | | *35 | *50 | *55 | *90 | | |
| | 0.50 (0.56) | none | — | 65 | | | | | 65 | 60 |
| | 0.50 (0.56) | 5.00 (5.6) | IF | *55 | | | | | 65 | 60 |
| | 1.00 (1.12) | none | — | | 100 | 55 | 100 | 100 | | |
| | 1.00 (1.12) | 5.00 (5.6) | IF | | 100 | *40 | 100 | 100 | | |
| | 0.50 (0.56) | none | — | 100 | | | | | 85 | 100 |
| | 0.50 (0.56) | 5.00 (5.6) | IF | 100 | | | | | *60 | 100 |
| | 1.00 (1.12) | none | — | | 100 | 55 | 100 | 100 | | |
| | 1.00 (1.12) | 5.00 (5.6) | IF | | 100 | *40 | 100 | 100 | | |
| | 0.50 (0.56) | none | — | 100 | | | | | 85 | 90 |
| | 0.50 (0.56) | 5.00 (5.6) | IF | 100 | | | | | *60 | 100 |
| | 0.50 (0.56) | none | — | | 10 | | | | | |
| | 0.50 (0.56) | 1.00 (1.12) | IF | | 10 | | | | | |
| | 0.50 (0.56) | 2.00 (2.24) | IF | | *0 | | | | | |
| | 0.50 (0.56) | 5.00 (5.6) | IF | | *0 | | | | | |

TABLE V (continued)

| Herbicide Name | Rate | Antidote Rate | Method | Milo % Inj | Wheat % Inj | Cotton % Inj | Rice % Inj | Barley % Inj | Corn % Inj | Soybean % Inj |
|---|---|---|---|---|---|---|---|---|---|---|
| 1-m-trifluoromethyl- | 0.50 (0.56) | none | — | | 10 | | | | | |
| phenyl-3-chloro- | 0.50 (0.56) | 1.00 (1.12) | PES/TM | | *0 | | | | | |
| 4-chloromethyl- | 0.50 (0.56) | 2.00 (2.24) | PES/TM | | *0 | | | | | |
| 2-pyrrolidone | 0.50 (0.56) | 5.00 (5.6) | PES/TM | | *0 | | | | | |
| | 0.75 (0.84) | none | — | | 20 | | | | | |
| | 0.75 (0.84) | 1.00 (1.12) | IF | | *10 | | | | | |
| | 0.75 (0.84) | 2.00 (2.24) | IF | | *0 | | | | | |
| | 0.75 (0.84) | 5.00 (5.6) | IF | | *0 | | | | | |
| | 0.75 (0.84) | none | — | | 20 | | | | | |
| | 0.75 (0.84) | 1.00 (1.12) | PES/TM | | *0 | | | | | |
| | 0.75 (0.84) | 2.00 (2.24) | PES/TM | | *0 | | | | | |
| | 0.75 (0.84) | 5.00 (5.6) | PES/TM | | *0 | | | | | |
| | 1.00 (1.12) | none | — | | 35 | | | | | |
| | 1.00 (1.12) | 1.00 (1.12) | IF | | *25 | | | | | |
| | 1.00 (1.12) | 2.00 (2.24) | IF | | *25 | | | | | |
| | 1.00 (1.12) | 5.00 (5.6) | IF | | *20 | | | | | |
| | 1.00 (1.12) | none | — | | 35 | | | | | |
| | 1.00 (1.12) | 1.00 (1.12) | PES/TM | | *10 | | | | | |
| | 1.00 (1.12) | 2.00 (2.24) | PES/TM | | *10 | | | | | |
| | 1.00 (1.12) | 5.00 (5.6) | PES/TM | | *0 | | | | | |
| | 2.00 (2.24) | none | — | | 65 | | | | | |
| | 2.00 (2.24) | 1.00 (1.12) | IF | | 65 | | | | | |
| | 2.00 (2.24) | 2.00 (2.24) | IF | | 65 | | | | | |
| | 2.00 (2.24) | 5.00 (5.6) | IF | | *40 | | | | | |
| | 2.00 (2.24) | none | — | | 65 | | | | | |
| | 2.00 (2.24) | 1.00 (1.12) | PES/TM | | *30 | | | | | |
| | 2.00 (2.24) | 2.00 (2.24) | PES/TM | | *30 | | | | | |
| | 2.00 (2.24) | 5.00 (5.6) | PES/TM | | *30 | | | | | |

TABLE VI
Herbicidal Effectiveness

Antidote: 2,2,2-Trifluoroethyl-N-p-chlorophenylcarbamate

| | | ANTIDOTE | | Percent Injury | | |
|---|---|---|---|---|---|---|
| Herbicide | Rate | Rate | Method | Mustard | Water-grass | Foxtail |
| 1-m-trifluoro-methylphenyl-3-chloromethyl-2-pyrrolidone | 0.50 (0.56) | none | — | 80 | 90 | 100 |
| | 0.50 (0.56) | 1.00 (1.12) | IF | 80 | 90 | 100 |
| | 0.50 (0.56) | 2.00 (2.24) | IF | 80 | 90 | 100 |
| | 0.50 (0.56) | 5.00 (5.6) | IF | 80 | 90 | 100 |
| | 0.50 (0.56) | none | — | 80 | 90 | 100 |
| | 0.50 (0.56) | 1.00 (1.12) | PES/TM | 80 | 80 | 100 |
| | 0.50 (0.56) | 2.00 (2.24) | PES/TM | 80 | 90 | 100 |
| | 0.50 (0.56) | 5.00 (5.6) | PES/TM | 80 | 80 | 100 |
| | 0.75 (0.84) | none | — | 85 | 100 | 100 |
| | 0.75 (0.84) | 1.00 (1.12) | IF | 85 | 100 | 100 |
| | 0.75 (0.84) | 2.00 (2.24) | IF | 85 | 100 | 100 |
| | 0.75 (0.84) | 5.00 (5.6) | IF | 85 | 100 | 100 |
| | 0.75 (0.84) | none | — | 85 | 100 | 100 |
| | 0.75 (0.84) | 1.00 (1.12) | PES/TM | 85 | 100 | 100 |
| | 0.75 (0.84) | 2.00 (2.24) | PES/TM | 85 | 100 | 100 |
| | 0.75 (0.84) | 5.00 (5.6) | PES/TM | 85 | 100 | 100 |
| | 1.00 (1.12) | none | — | 100 | 100 | 100 |
| | 1.00 (1.12) | 1.00 (1.12) | IF | 100 | 100 | 100 |
| | 1.00 (1.12) | 2.00 (2.24) | IF | 100 | 100 | 100 |
| | 1.00 (1.12) | 5.00 (5.6) | IF | 100 | 100 | 100 |

TABLE VI (continued)
Herbicidal Effectiveness

Antidote: 2,2,2-Trifluoroethyl-N-p-chlorophenylcarbamate

| Herbicide | Rate | ANTIDOTE Rate | Method | Percent Injury Mustard | Water-grass | Foxtail |
|---|---|---|---|---|---|---|
| 1-m-trifluoro-methylphenyl-3-chloromethyl-2-pyrrolidone | 1.00 (1.12) | none | — | 100 | 100 | 100 |
| | 1.00 (1.12) | 1.00 (1.12) | PES/TM | 100 | 100 | 100 |
| | 1.00 (1.12) | 2.00 (2.24) | PES/TM | 100 | 100 | 100 |
| | 1.00 (1.12) | 5.00 (5.6) | PES/TM | 100 | 100 | 100 |
| | 2.00 (2.24) | none | — | 100 | 100 | 100 |
| | 2.00 (2.24) | 1.00 (1.12) | IF | 100 | 100 | 100 |
| | 2.00 (2.24) | 2.00 (2.24) | IF | 100 | 100 | 100 |
| | 2.00 (2.24) | 5.00 (5.6) | IF | 100 | 100 | 100 |
| | 2.00 (2.24) | none | — | 100 | 100 | 100 |
| | 2.00 (2.24) | 1.00 (1.12) | PES/TM | 100 | 100 | 100 |
| | 2.00 (2.24) | 2.00 (2.24) | PES/TM | 100 | 100 | 100 |
| | 2.00 (2.24) | 5.00 (5.6) | PES/TM | 100 | 100 | 100 |

TABLE VII

Antidotal Effectiveness of N,N-diallyldichloroacetamide

| Herbicide Name | Rate | Antidote Rate | Antidote Method | Milo % Inj | Wheat % Inj | Cotton % Inj | Rice % Inj | Barley % Inj | Corn % Inj | Soybean % Inj |
|---|---|---|---|---|---|---|---|---|---|---|
| 1-m-trifluoromethyl-phenyl-3-chloro-4-chloromethyl-2-pyrrolidone | 1.00 (1.12) | none | — | | 100 | 50 | 100 | 100 | | |
| | 1.00 (1.12) | 5.00 (5.6) | IF | | 100 | 50 | 100 | 100 | | |
| | 1.25 (1.4) | none | — | | 100 | 70 | 100 | 100 | | |
| | 1.25 (1.4) | 5.00 (5.6) | IF | | 100 | 70 | 100 | 100 | | |
| | 0.50 (0.56) | none | — | 90 | | | | | 75 | 65 |
| | 0.50 (0.56) | 5.00 (5.6) | IF | 90 | | | | | *40 | 65 |
| | 0.50 (0.56) | none | — | 100 | | | | | 100 | 100 |
| | 0.50 (0.56) | 5.00 (5.6) | IF | 100 | | | | | *60 | 100 |
| | 0.50 (0.56) | none | — | | | | | | 90 | |
| | 0.50 (0.56) | 1.00 (1.12) | IF | | | | | | *40 | |
| | 0.50 (0.56) | 5.00 (5.6) | IF | | | | | | *45 | |
| | 0.50 (0.56) | none | — | | | | | | 55 | |
| | 0.50 (0.56) | 1.00 (1.12) | IF | | | | | | *25 | |
| | 0.50 (0.56) | 5.00 (5.6) | IF | | | | | | *25 | |
| | 0.50 (0.56) | none | — | 75 | | | | | 70 | |
| | 0.50 (0.56) | 1.00 (1.12) | PES | 75 | | | | | 70 | |
| | 0.50 (0.56) | 5.00 (5.6) | PES | 75 | | | | | 70 | |
| | 0.50 (0.56) | none | — | | | | | | 65 | |
| | 0.50 (0.56) | 1.00 (1.12) | PES | | | | | | *30 | |
| | 0.50 (0.56) | 2.00 (2.24) | PES | | | | | | *35 | |
| | 0.50 (0.56) | 5.00 (5.6) | PES | | | | | | *35 | |
| | 0.50 (0.56) | none | — | | | | | | 55 | |
| | 0.50 (0.56) | 1.00 (1.12) | PES | | | | | | *40 | |
| | 0.50 (0.56) | 5.00 (5.6) | PES | | | | | | *35 | |

TABLE VII (continued)

| Herbicide Name | Rate | Antidote Rate | Antidote Method | Milo % Inj | Wheat % Inj | Cotton % Inj | Rice % Inj | Barley % Inj | Corn % Inj | Soybean % Inj |
|---|---|---|---|---|---|---|---|---|---|---|
| N-m-cyanophenyl-3-chloro-4-chloro-methyl pyrrolidone-2 | 1.00 (1.12) | none | — | 95 | 80 | 30 | | | 80 | |
| | 1.00 (1.12) | 0.50 (0.56) | PPI | *60 | *50 | 30 | | | *60 | |
| | 1.00 (1.12) | 1.00 (1.12) | PPI | *60 | 70 | 40 | | | *70 | |
| | 1.00 (1.12) | none | — | 65 | 60 | 30 | | | 55 | |
| | 1.00 (1.12) | 0.50 (0.56) | PES/TM | 60 | 50 | 30 | | | *40 | |
| | 1.00 (1.12) | 1.00 (1.12) | PES/TM | 70 | *50 | 40 | | | *30 | |
| | 1.00 (1.12) | none | — | 90 | | | | | 60 | |
| | 1.00 (1.12) | 0.25 (0.28) | PES/TM | 90 | | | | | 70 | |
| | 1.00 (1.12) | 0.50 (0.56) | PES/TM | 95 | | | | | 70 | |
| | 1.00 (1.12) | 1.00 (1.12) | PES/TM | 80 | | | | | 70 | |

TABLE VIII
Herbicidal Effectiveness

Antidote: N,N-Diallyldichloroacetamide

| | | | | WEEDS | | | | | | |
|---|---|---|---|---|---|---|---|---|---|---|
| Herbicide | Rate | Antidote Rate | Antidote Method | Water-grass | Fox-tail | Wild Oat | Mustard | Wild Cane | Annual morning glory | Velvet leaf |
| 1-m-trifluoro-methylphenyl-3-chloromethyl-2-pyrrolidone | 0.50 (0.56) | none | — | | | | 100 | | | |
| | 0.50 (0.56) | 5.00 (5.6) | IF | | | | 100 | | | |
| | 0.50 (0.56) | none | — | | | | 100 | | | |
| | 0.50 (0.56) | 1.00 (1.12) | IF | | | | 100 | | | |
| | 0.50 (0.56) | none | — | 100 | | | | | | |
| | 0.50 (0.56) | 1.00 (1.12) | IF | 100 | | | | | | |
| | 0.50 (0.56) | 5.00 (5.6) | IF | 100 | | | | | | |
| | 0.50 (0.56) | none | — | 100 | | | 100 | | | |
| | 0.50 (0.56) | 1.00 (1.12) | IF | 100 | | | 100 | | | |
| | 0.50 (0.56) | 5.00 (5.6) | IF | 100 | | | 100 | | | |
| | 0.50 (0.56) | none | — | | 100 | | 100 | | | |
| | 0.50 (0.56) | 1.00 (1.12) | PES | | 100 | | 100 | | | |
| | 0.50 (0.56) | 2.00 (2.24) | PES | | 100 | | 100 | | | |
| | 0.50 (0.56) | 5.00 (5.6) | PES | | 100 | | 100 | | | |
| | 0.50 (0.56) | none | — | 100 | 100 | 90 | 100 | | | |
| | 0.50 (0.56) | 1.00 (1.12) | PES | 100 | 100 | 90 | 100 | | | |
| | 0.50 (0.56) | 5.00 (5.6) | PES | 100 | 100 | 90 | 100 | | | |
| N-m-cyanophenyl 3-chloro-4-chloro-methyl pyrrolidone-2 | 1.00 (1.12) | none | — | 100 | 100 | | | 90 | 80 | 100 |
| | 1.00 (1.12) | none | — | 100 | 100 | | | 80 | 100 | 100 |
| | 1.00 (1.12) | 0.25 (0.28) | PES/TM | 100 | 100 | | | 100 | 100 | 100 |
| | 1.00 (1.12) | 0.50 (0.56) | PES/TM | 100 | 100 | | | 90 | 100 | 100 |
| | 1.00 (1.12) | 1.00 (1.12) | PES/TM | 100 | 100 | | | 100 | 100 | 100 |

TABLE IX

Antidotal Effectiveness of 2,2,5-Trimethyl-3-(dichloroacetyl)-oxazolidone

| Herbicide Name | Rate | Antidote Rate | Antidote Method | Milo % Inj | Wheat % Inj | Cotton % Inj | Rice % Inj | Barley % Inj | Corn % Inj | Soybean % Inj |
|---|---|---|---|---|---|---|---|---|---|---|
| 1-m-trifluoromethyl-phenyl-3-chloro-4-chloromethyl-2-pyrrolidone | 0.50 (0.56) | none | — | | | | | | 90 | |
| | 0.50 (0.56) | 1.00 (1.12) | IF | | | | | | *35 | |
| | 0.50 (0.56) | 5.00 (5.6) | IF | | | | | | *40 | |
| N-m-cyanophenyl 3-chloro-4-chloromethyl-pyrrolidone-2 | 1.00 (1.12) | none | — | 95 | 80 | 30 | | | 80 | |
| | 1.00 (1.12) | 0.50 (0.56) | PPI | *50 | *50 | 20 | | | *60 | |
| | 1.00 (1.12) | 1.00 (1.12) | PPI | *50 | *30 | 40 | | | *60 | |
| | 1.00 (1.12) | none | — | 65 | 60 | 30 | | | 55 | |
| | 1.00 (1.12) | 0.50 (0.56) | PES/TM | 60 | 50 | 30 | | | *30 | |
| | 1.00 (1.12) | 1.00 (1.12) | PES/TM | 80 | 50 | 60 | | | 50 | |

TABLE X
Herbicidal Effectiveness

Antidote: 2,2,5-Trimethyl-3-(dichloroacetyl)oxazolidone

| | | Antidote | | WEEDS | | | | |
|---|---|---|---|---|---|---|---|---|
| Herbicide | Rate | Rate | Method | Water grass | Fox-tail | Wild Cane | Annual morning glory | Velvet leaf |
| 1-m-trifluoro-methylphenyl-3-chloromethyl-2-pyrrolidone | 0.50 (0.56) | none | — | 100 | 100 | 100 | 70 | 100 |
| | 0.50 (0.56) | 0.25 (0.28) | PES/TM | 100 | 100 | 100 | 50 | 100 |
| | 0.50 (0.56) | 0.50 (0.56) | PES/TM | 100 | 100 | 100 | 100 | 100 |
| | 0.50 (0.56) | 1.00 (1.12) | PES/TM | 100 | 100 | 100 | 80 | 100 |
| N-m-cyanophenyl-3-chloro-4-chloromethyl pyrrolidone-2 | 1.00 (1.12) | none | — | 100 | 100 | 85 | 90 | 100 |
| | 1.00 (1.12) | 0.25 (0.28) | PES/TM | 100 | 100 | 90 | 70 | 100 |
| | 1.00 (1.12) | 0.50 (0.56) | PES/TM | 100 | 100 | 90 | 70 | 100 |
| | 1.00 (1.12) | 1.00 (1.12) | PES/TM | 100 | 100 | 100 | 100 | 100 |

Field Tests of 2,2,5-Trimethyl-3-(dichloroacetyl)-oxazolidine

2,2,5-Trimethyl-3-(dichloroacetyl)-oxazolidine was tested in the field. Plots six feet (1.83 m) wide by thirty feet (9.14 m) long were prepared for planting. Seeds were planted in plots with a seed planter at a depth of 0.75 to 1.5 inches (1.9 to 3.8 cms), depending on the species seeded. The plots were treated with an herbicide alone or with an herbicide and antidote composition.

Treatment was applied from a tractor calibrated to deliver 25 gal/acre (234 l/ha). The amount of solution needed per plot was 0.103 gal (0.39 l). The herbicide and antidote formulations used contain 2 lb of active ingredient per gallon of formulation (0.24 kg/l).

The amount of herbicide or antidote formulation needed per plot can be calculated as follows:

Amount formulation needed = A×B×C×D×E

A = Rate to be applied in pounds of active ingredient per acre (1 lb/acre = 1.12 kg/ha)
B = gallons of formulation per lb of active ingredient (1 lb/gallon = 0.12 kg/l)
C = 3785.3 ml/gallon
D = 1 acre/43560 square feet (0.405 ha)
E = Plot area in square feet

For example, to apply herbicide alone at 1/3 lb/acre (0.373 kg/ha), the following calculation applies:

Amount formulation = 0.333 lb/acre × [1/2 gal formulation/lb active ingredient)]
× 3785.3 (ml/gal)
× (1/43560) (acre/sq.ft.)
× 180 sq. ft.
= 2604 ml/plot

This amount of formulation is measured and diluted up to the 0.103 gal (399.1 ml) needed with water. The herbicide solution is then applied at the calibrated rate of 25 gal/acre (234 l/ha).

When both an herbicide and antidote were applied, the herbicide antidote were measured separately and then mixed together. The combined solution was diluted up to the 0.103 gal (0.39 l) needed with water. Each plot was sprayed only once.

KEY TO TABLES XI, XII, XII, AND XIV
herbicide = 1-m-Trifluoromethylphenyl-3-chloro-4-chloromethyl-2-pyrrolidone
Antidote = 2,2,5-Trimethyl-N-dichloroacetyl oxazolidine

The rates shown for both herbicide and antidote are in pounds per acre (kg/ha)

Damage to the crop (phytotoxicity) is measured quantitatively in terms of the extent as well as the degree of bleaching. These measurements were made 4—5 weeks after germination.

The extent of bleaching refers to the number of plants showing bleaching symptoms in a plant population, irrespective of the degree of bleaching. Two bleached plants in a population of 10 would be recorded as 20% under extent.

The degree of bleaching is a measure of severity. It refers to the leaf area which is bleached in relation to the total leaf area of the whole plant, expressed in percentage.

Percent weed control is a comparison of the damage done to the weeds in the treated plots as compared to the weeds which are present in the control (untreated) plot. The damage done is a function of the number of plants injured and the extent of injury to each plant. Weed control and phytotoxicity readings are measured on the same date.

Table XI shows the effect *on crops* of the antidote in combination with the herbicide formulated as an emulsifiable concentrate. The crops tested were 15 varieties of corn. For convenience, these varieties are referred to in the Table I as follows:

A = Cargill 924
B = Cargill 967
C = Dekalb XL—25A
D = Dekalb XL—55A
E = Dekalb XL—72B
F = Dekalb XL—729 (F2)
G = PAG SX—17A
H = PAG SX—189
I = PAG SX—249
J = Northrup King PX—79
K = Northrup King PX—95
L = Northrup King PX—707
M = Pioneer 3541
N = Pioneer 3183
O = Trojan T—1189

Table XII shows the effect *on weeds* of the antidote in combination with the herbicide formulated as an emulsifiable concentrate. For convenience, the weeds are referred to in Table XII as follows:

AA = Barnyardgrass (*Echinochloa crusgalli*)
BB = Diffuse lovegrass (*Eragrostis diffusa*)
CC = Common purslane (*Portulaca oleracea*)
EE = Field bindweed (*Convolvulus arvensis*)
FF = Pigweed (*Amaranthus spp.*)
GG = Lambsquarter (*Chenopodium spp.*)
HH = Puncture vine (*Tribulus terrestris*)

Table XIII shows the effect on crops of the antidote in combination with the herbicide *formulated as a microcapsule.* The crops tested were barley, oat, and wheat.

Table XIV shows the effect on weeds of the antidote in combination with the herbicide formulated as a microcapsule. Four of these weeds were seeded and are referred to in the table as follows:

II = Browntop millet *(Panicum fasciculation)*
JJ = Red millet (*Panicum miliaceum*)
KK = Wild oat (*Avena fatua*)
LL = Green foxtail (*Setaria viridis*)

The remaining eight weeds shown in Table XIV were not seeded and are referred to in the table as follows:

MM = Purslane (*Portulaeu oleracea*)
NN = Pigweed (*Amaranthus spp.*)
OO = Red maids (*Calandrinia ciliata*)
PP = Lambsquarter (*Chenopodium spp.*)
QQ = Sheperdspurse (*Capsella bursa-pastoris*)
RR = Bluegrass (*Poa spp.*)
SS = Watergrass (*Echinochloa crusgalli*)
TT = Jungle rice (*Echinochloa colonum*)

Effect on crops of 2,2,5-trimethyl-N-dichloroacetyl oxazolidone in combination with 1-m-trifluoromethylphenyl-3-chloro-4-chloromethyl-2-pyrrolidone formulated as an emulsifiable concentrate (The numerical data refers to the % bleaching of the crop; for a listing of crops, see page 26.)

| Herbicide Rate | Antidote Rate | A | B | C | D | E | F | G | H | I | J | K | L | M | N | O |
|---|---|---|---|---|---|---|---|---|---|---|---|---|---|---|---|---|
| 0.33 (0.373) | — | 30* | 20 | 13 | 20 | 19 | 19 | 11 | 15 | 16 | 6 | 5 | 3 | 9 | 8 | 14 |
| 0.33 (0.373) | 0.50 (0.56) | 14 | 6 | 4 | 8 | 7 | 9 | 3 | 6 | 5 | 2 | 2 | 2 | 4 | 4 | 8 |
| 0.50 (0.56) | — | 46 | 33 | 29 | 35 | 44 | 34 | 23 | 23 | 30 | 16 | 14 | 9 | 28 | 26 | 38 |
| 0.50 (0.56) | 0.50 (0.56) | 31 | 21 | 19 | 20 | 28 | 21 | 11 | 13 | 10 | 6 | 10 | 6 | 20 | 18 | 21 |

*Data is an average of four replications.

TABLE XII

Effect on weeds of 2,2,5-trimethyl-N-dichloroacetyl oxazolidine in combination with 1-m-trifluoromethyl-phenyl-3-chloro-4-chloromethyl-2-pyrrolidone formulated as an emulsifiable concentrate

| Herbicide Rate | Antidote Rate | AA | BB | CC | DD | EE | FF | GG | HH |
|---|---|---|---|---|---|---|---|---|---|
| 0.33 (0.373) | — | 76* | 92 | 92 | 97 | 30 | 98 | 98 | 86 |
| 0.33 (0.373) | 0.50 (0.56) | 85 | 90 | 91 | 99 | 10 | 99 | 99 | 84 |
| 0.50 (0.56) | — | 85 | 95 | 95 | 99 | 25 | 98 | 98 | 95 |
| 0.50 (0.56) | 0.50 (0.56) | 85 | 93 | 97 | 99 | 11 | 99 | 99 | 93 |

*Data is an average of four replications.

TABLE XIII

Effect on crops of 2,2,5-trimethyl-N-dichloroacetyl oxazolidine in combination with 1-m-trifluoromethyl-phenyl-3-chloro-4-chloromethyl-2-pyrrolidone formulated as a microcapsule

| Herbicide | Antidote | % INJURY | | |
|---|---|---|---|---|
| Rate | Rate | Barley | Oat | Wheat |
| 0.20 (0.224) | — | 1* | 1 | 1 |
| 0.20 (0.224) | 0.50 (0.56) | 5 | 3 | 1 |
| 0.20 (0.224) | 1.00 (1.12) | 5 | 4 | 3 |
| 0.25 (0.28) | — | 3 | 3 | 1 |
| 0.25 (0.28) | 0.50 (0.56) | 5 | 5 | 1 |
| 0.25 (0.28) | 1.00 (1.12) | 5 | 5 | 3 |
| 0.33 (0.373) | — | 4 | 4 | 3 |
| 0.33 (0.373) | 0.50 (0.56) | 5 | 5 | 1 |
| 0.33 (0.373) | 1.00 (1.12) | 8 | 5 | 3 |

*Data is an average of two replications.

TABLE XIV

Effect on weeds of 2,2,5-trimethyl-N-dichloroacetyl oxazolidine in combination with 1-m-trifluoromethylphenyl-3-chloro-4-chloromethyl-2-pyrrolidone formulated as a microcapsule

| Herbicide Rate | Antidote Rate | % WEED CONTROL | | | | | | | | | | | |
|---|---|---|---|---|---|---|---|---|---|---|---|---|---|
| 0.20 (0.224) | — | 33* | 40 | 5 | 58 | 90 | 85 | 93 | 85 | 85 | 80 | 83 | 70 |
| 0.20 (0.224) | 0.50 (0.56) | 68 | 58 | 10 | 60 | 90 | 90 | 95 | 85 | 95 | 93 | 90 | 73 |
| 0.20 (0.224) | 1.00 (1.12) | 78 | 85 | 15 | 80 | 95 | 95 | 95 | 90 | 95 | 95 | 95 | 75 |
| 0.25 (0.28) | — | 53 | 53 | 5 | 75 | 93 | 90 | 98 | 90 | 90 | 85 | 85 | 75 |
| 0.25 (0.28) | 0.50 (0.56) | 95 | 99 | 10 | 87 | 95 | 95 | 98 | 95 | 98 | 95 | 95 | 80 |
| 0.20 (0.28) | 1.00 (1.12) | 99 | 99 | 10 | 99 | 95 | 95 | 98 | 97 | 98 | 95 | 97 | 83 |
| 0.33 (0.373) | — | 58 | 53 | 10 | 70 | 98 | 98 | 98 | 95 | 98 | 90 | 95 | 90 |
| 0.33 (0.373) | 0.50 (0.56) | 96 | 97 | 18 | 99 | 98 | 98 | 98 | 95 | 98 | 98 | 98 | 90 |
| 0.33 (0.373) | 1.00 (1.12) | 99 | 99 | 23 | 99 | 98 | 98 | 98 | 98 | 98 | 98 | 98 | 93 |

*Data is an average of two replications.

*Test Results*

The compositions of pyrrolidone herbicides and antidote compounds were effective for the reduction of herbicidal injury to a wide variety of crops. Use of the antidote compounds did not result in a reduction of herbicidal injury to weeds.

The 2,2,5-trimethyl-N-dichloroacetyl oxazolidine compound shows good antidotal effects for the 1-m-trifluoromethylphenyl-3-chloro-4-chloromethyl-2-pyrrolidone herbicide. When the herbicide is formulated as an emulsifiable concentrate, the antidote reduces bleaching of the crop while maintaining good weed control (Tables I and II). When the herbicide is formulated as a microcapsule, the antidote maintains low bleaching of the crop while increasing or maintaining weed control (Tables XIII and XIV).

*Formulations*

A formulation is the incorporation of a formulant in a form which is directly usable on crops and weeds. As defined herein, a "formulant" is the material which is to be formulated. The formulant may be either an antidote compound alone or an herbicide and antidote composition. The purpose of the formulation is to apply the formulant to the locus where it is desired to establish herbicidal selectivity by a convenient method. The "locus" may include soil, seeds, seedlings and vegetation.

The formulations are commonly dusts, wettable powders, granules, solutions or emulsifiable concentrates.

Dusts are free-flowing powder compositions containing the formulant impregnated on a particulate carrier. The particle size of the carriers is usually in the approximate range of 30 to 50 microns. Examples of suitable carriers are talc, bentonite, diatomaceous earth, and pyrophyllite. The composition generally contains up to 50% of formulant. Anti-caking and anti-static agents may also be added. Dusts may be applied by spraying from boom and hand sprayers on airplanes.

Wettable powders are finely divided compositions comprising a particulate carrier impregnated with the formulant and additionally containing one or more surface active agents. The surface active agent promotes rapid dispersion of the powder in an aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omegasubstituted polyethylene glycols of relatively long chain length. A list of surface active agents suitable for use in agriculture formulations can be found in Wade Van Valkenburg, *Pesticide Formulations* (Marcel Dekker, Inc., N.Y., 1973) at pages 79—84.

Granules comprise the formulant impregnated on a particulate inert carrier having a particle size of about 1 to 2 millimeters (mm) in diameter. The granules can be made by spraying a solution of the formulant in a volatile solvent onto the granular carrier. Examples of suitable carriers for the preparation of granules include clay, vermiculite sawdust, and granular carbon.

Emulsifiable concentrates consist of an oil solution of the formulant plus an emulsifying agent. Prior to use the concentrate is diluted with water to form a suspended emulsion of oil droplets. The emulsifiers

used are usually a mixture of anionic and nonionic surfactants. Other additives, such as suspending agents and thickeners, may be included in the emulsifiable concentrate.

When the formulant is an antidote and herbicide composition, the proportion of antidote compound to herbicide compound generally ranges from approximately 0.001 to 30 parts by weight of the antidote compound per weight of the herbicide compound.

Formulations generally contain several additives in addition to the formulant and carrier or agent. Among these are inert ingredients, diluent carriers, organic solvents, water, oil and water, water in oil emulsions, carriers of dusts and granules, and surface active wetting, dispersing and emulsifying agents. Fertilizers, e.g., ammonium nitrate urea and superphosphate, may be included. Aids to rooting and growth, e.g., compost, manure, humus and sand, may also be included.

Alternatively, the antidote compounds and herbicide and antidote compositions of this invention can be applied to a crop by addition of the formulant to irrigation water supplied to the field to be treated. This method of application permits the penetration of the compositions into the soil as the water is absorbed.

As another alternative, the formulant can be applied to the soil in the form of a solution in a suitable solvent. Solvents frequently used in these formulations include kerosene, fuel oil, xylene, petroleum fractions with boiling ranges above xylene and aromatic petroleum fractions rich in methylated naphthalenes. Liquid solutions, like dusts, may be applied by spraying from boom and hand sprayers on airplanes.

## Claims

1. A composition comprising:

(a) an herbicidally effective amount of a pyrrolidone compound of the formula

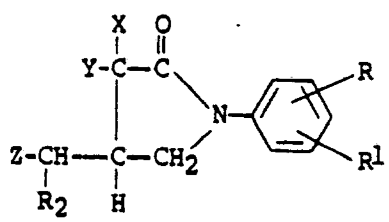

in which

X is hydrogen, chlorine or methyl;

Y is hydrogen, chlorine or bromine;

Z is chlorine or bromine;

R is hydrogen, alkyl having 1 to 4 carbon atoms, inclusive, acetyl, chlorine, bromine, fluorine, iodine, trifluoromethyl, nitro, cyano, alkoxy having 1 to 4 carbon atoms, inclusive, alkylthio having 1 to 4 carbon atoms inclusive, alkylsulfinyl having 1 to 4 carbon atoms, inclusive, alkylsulfonyl having 1 to 4 carbon atoms, inclusive, trifluoromethylthio, trifluoromethylsulfinyl, trifluoromethylsulfonyl, pentafluoropropionamido, or 3-methylureido;

$R_1$ is hydrogen, alkyl having 1 to 4 carbon atoms, inclusive, chlorine or trifluoromethyl; and

$R_2$ is alkyl having 1 to 4 carbon atoms, inclusive, or hydrogen; and,

(b) a non-phytotoxic antidotally effective amount of a compound having one of the following formulas:

1(b) 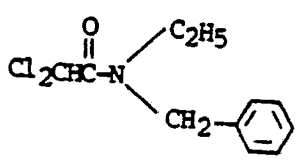 ;

2(b) 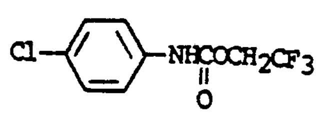 ;

3(b) 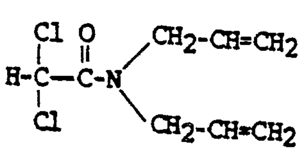 ;

or 4(b) 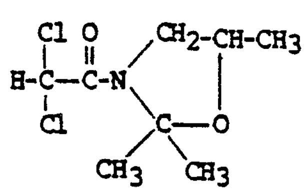 .

2. A composition as defined in Claim 1 wherein X is hydrogen, Y is chlorine, Z is chlorine, R is m-trifluoromethyl, $R_1$ is hydrogen, and $R_2$ is hydrogen.

3. A composition as defined in either of Claims 1 or 2 wherein the pyrrolidone compound is formulated as an emulsifiable concentrate.

4. A composition as defined in either of Claims 1 or 2 wherein the pyrrolidone is formulated as a microcapsule.

5. A method of controlling undesirable vegetation and reducing pyrrolidone herbicidal crop injury which comprises applying to the locus where control is desired a composition comprising:

(a) an herbicidally effective amount of a pyrrolidone compound of the formula

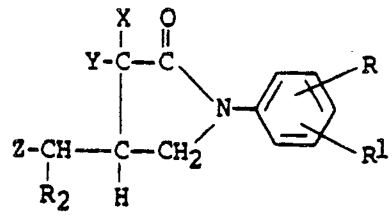

in which

X is hydrogen, chlorine or methyl;

Y is hydrogen, chlorine or bromine;

Z is chlorine or bromine;

R is hydrogen, alkyl having 1 to 4 carbon atoms, inclusive, acetyl, chlorine, bromine, fluorine, iodine, trifluoromethyl, nitro, cyano, alkoxy having 1 to 4 carbon atoms, inclusive, alkylthio having 1 to 4 carbon atoms, inclusive, alkylsulfinyl having 1 to 4 carbon atoms, inclusive, alkylsulfonyl having 1 to 4 carbon atoms, inclusive, trifluoromethylthio, trifluoromethylsulfinyl, trifluoromethylsulfonyl, pentafluoropropionamido, or 3-methylureido;

$R_1$ is hydrogen, alkyl having 1 to 4 carbon atoms, inclusive, chlorine or trifluoromethyl; and,

$R_2$ is alkyl having 1 to 4 carbon atoms, inclusive, or hydrogen; and,

(b) a non-phytotoxic antidotally effective amount of a compound having one of the following formulas:

1(b) 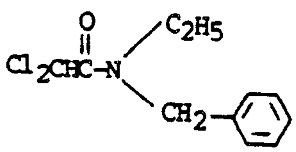 ;

2(b) 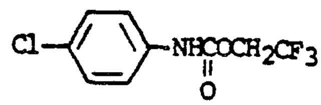 ;

3(b) 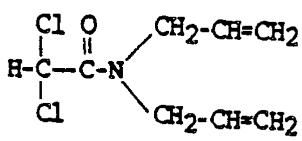 ;

or

4(b) 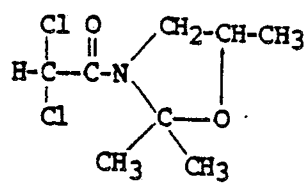 .

6. A method as defined in Claim 5 wherein X is hydrogen, Y is chlorine, Z is chlorine, R is m-trifluoromethyl; $R_1$ is hydrogen, and $R_2$ is hydrogen.

7. A method as defined in either of Claims 5 or 6 wherein the pyrrolidone compound is formulated as an emulsifiable concentrate.

8. A method as defined in either of Claims 5 or 6 wherein the pyrrolidone compound is formulated as a microcapsule.

9. The process for preparing an antidote herbicidal composition comprising the admixing of:

(b) an herbicidally effective amount of a pyrrolidone compound of the formula

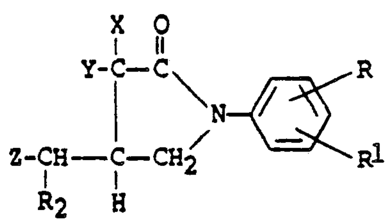

in which

X is hydrogen, chlorine or methyl;

Y is hydrogen, chlorine, or bromine;

Z is chlorine or bromine;

R is hydrogen, alkyl having 1 to 4 carbon atoms, inclusive, acetyl, chlorine, bromine, fluorine, iodine, trifluoromethyl, nitro, cyano, alkoxy having 1 to 4 carbon atoms, inclusive, alkylthio having 1 to 4 carbon atoms, inclusive, alkylsulfinyl having 1 to 4 carbon atoms, inclusive, alkylsulfonyl having 1 to 4 carbon

atoms, inclusive, trifluoromethylthio, trifluoromethylsulfinyl, trifluoromethylsulfonyl, pentafluoropropionamido, or 3-methylureido;

$R_1$ is hydrogen, alkyl having 1 to 4 carbon atoms, inclusive, chlorine or trifluoromethyl; and,

$R_2$ is alkyl having 1 to 4 carbon atoms, inclusive, or hydrogen; with

(b) a non-phytotoxic antidotally effective amount of a compound corresponding to one of the following formulas:

1(b) 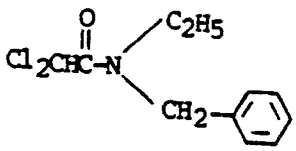 ; 2(b) 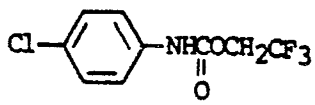 ;

3(b) 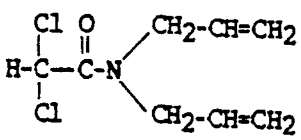 ; or 4(b) 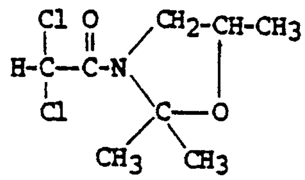

in a weight ratio of the pyrrolidone herbicide to said antidote from 0.01:1 to 30:1.

**Patentansprüche**

1. Gemisch aus
(a) einem Pyrrolidon in herbizid wirksamer Menge mit der Formel

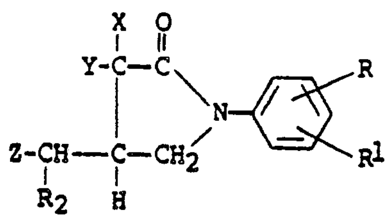

in der

X Wasserstoff, Chlor oder Methyl,

Y Wasserstoff, Chlor oder Brom,

Z Chlor oder Brom,

R Wasserstoff, Alkyl mit einschließlich 1 bis 4 Kohlenstoffatomen, Acetyl, Chlor, Brom, Fluor, Jod, Trifluormethyl, Nitro, Cyano, Alkoxy mit einschließlich 1 bis 4 Kohlenstoffatomen, Alkylthio mit einschließlich 1 bis 4 Kohlenstoffatomen, Alkylsulfinyl mit einschließlich 1 bis 4 Kohlenstoffatomen, Alkylsulfonyl mit einschleißlich 1 bis 4 Kohlenstoffatomen, Trifluormethylthio, Trifluormethylsulfinyl, Trifluormethylsulfonyl, Pentafluorpropionamido oder 3-Methylureido,

$R_1$ Wasserstoff, Alkyl mit einschließlich 1 bis 4 Kohlenstoffatomen, Chlor oder Trifluormethyl, und

$R_2$ Alkyl mit einschließlich 1 bis 4 Kohlenstoffatomen oder Wasserstoff sind,

und

(b) einem Antidot in nicht pflanzengiftiger, jedoch wirksamer Menge mit einer der folgenden Formeln

1(b) 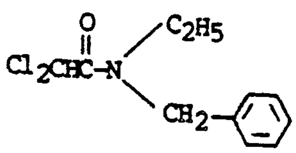 ; 2(b) 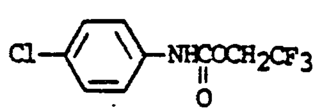 ;

3(b) 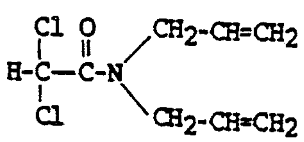 ; 4(b) 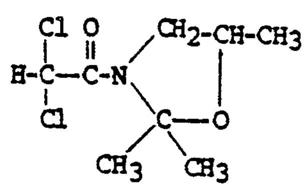 .

2. Gemisch nach Anspruch 1, dadurch gekennzeichnet, daß X Wasserstoff, Y Chlor, Z Chlor, R m-Trifluormethyl, $R_1$ Wasserstoff und $R_2$ Wasserstoff sind.

3. Gemisch nach einem der Ansprüche 1 oder 2, dadurch gekennzeichnet, daß das Pyrrolidon als Emulsionkonzentrat formuliert ist.

4. Gemisch nach einem der Ansprüche 1 oder 2, dadurch gekennzeichnet, daß das Pyrrolidon als Mikrokapsel formuliert ist.

5. Verfahren zur Kontrolle unerwünschter Vegetation und Reduzierung von durch Pyrrolidonherbizide hervorgerufenen Nutzpflanzenschädigungen, dadurch gekennzeichnet, daß am Ort, wo Kontrolle gewüncht wird, ein Gemisch angewandt wird, das

(a) ein Pyrrolidon in herbizid wirksamer Menge mit der Formel

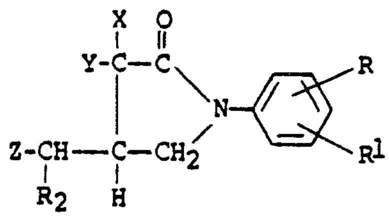

in der

X Wasserstoff, Chlor oder Methyl,

Y Wasserstoff, Chlor oder Brom,

Z Chlor oder Brom,

R Wasserstoff, Alkyl mit einschließlich 1 bis 4 Kohlenstoffatomen, Acetyl, Chlor, Brom, Fluor, Jod, Trifluormethyl, Nitro, Cyano, Alkoxy mit einschließlich 1 bis 4 Kohlenstoffatomen, Alkylthio mit einschließlich 1 bis 4 Kohlenstoffatomen, Alkylsulfinyl mit einschließlich 1 bis 4 Kohlenstoffatomen, Alkylsulfonyl mit einschließlich 1 bis 4 Kohlenstoffatomen, Trifluormethylthio, Trifluormethylsulfinyl, Trifluormethylsulfonyl, Pentafluorpropionamido oder 3-Methylureido,

$R_1$ Wasserstoff, Alkyl mit einschließlich 1 bis 4 Kohlenstoffatomen, Chlor oder Trifluormethyl, und

$R_2$ Alkyl mit einschließlich 1 bis 4 Kohlenstoffatomen oder Wasserstoff sind,

und

(b) ein Antidot in nicht pflanzengiftiger, jedoch wirksamer Mente mit einer der folgenden Formeln

1(b) 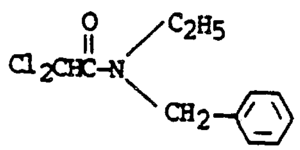 ;

2(b) 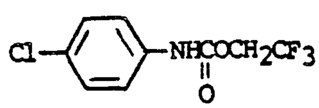 ;

3(b) 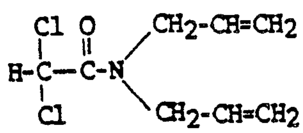 ;

4(b) 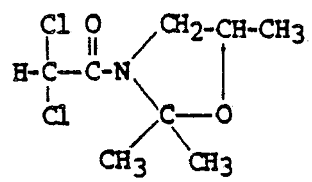 .

enthält.

6. Verfahren nach Anspruch 5, dadurch gekennzeichnet, daß X Wasserstoff, Y Chlor, Z Chlor, R m-Trifluormethyl, $R_1$ Wasserstoff und $R_2$ Wasserstoff sind.

7. Verfahren nach einem der Ansprüche 5 oder 6, dadurch gekennzeichnet, daß das Pyrrolidon als Emulsionskonzentrat formuliert ist.

8. Verfahren nach einem der Ansprüche 5 oder 6, dadurch gekennzeichnet, daß das Pyrrolidon als Mikrokapsel formuliert ist.

9. Verfahren zur Herstellung eines herbiziden Antidotgemisches, dadurch gekennzeichnet, daß

(a) ein Pyrrolidon in herbizid wirksamer Menge mit der Formel

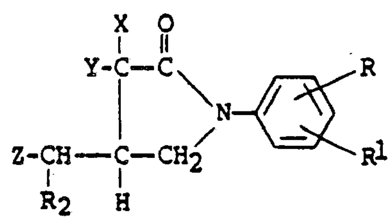

in der

X Wasserstoff, Chlor, oder Methyl,

Y Wasserstoff, Chlor oder Brom,

Z Chlor oder Brom,

R Wasserstoff, Alkyl mit einschließlich 1 bis 4 Kohlenstoffatomen, Acetyl, Chlor, Brom, Fluor, Jod, Trifluormethyl, Nitro, Cyano, Alkoxy mit einschließlich 1 bis 4 Kohlenstoffatomen, Alkylthio mit einschließlich 1 bis 4 Kohlenstoffatomen, Alkylsulfinyl mit einschleißlich 1 bis 4 Kohlenstoffatomen, Alkylsulfonyl mit einschließlich 1 bis 4 Kohlenstoffatomen, Trifluormethylthio, Trifluormethylsulfinyl, Trifluormethylsulfonyl, Pentafluorpropionamido oder 3-Methylureido,

$R_1$ Wasserstoff, Alkyl mit einschließlich 1 bis 4 Kohlenstoffatomen, Chlor oder Trifluormethyl, und

$R_2$ Alkyl mit einschließlich 1 bis 4 Kohlenstoffatomen oder Wasserstoff sind,

und

(b) ein Antidot in nicht pflanzengiftiger, jedoch wirksamer Menge mit einer der folgenden Formeln

1(b) 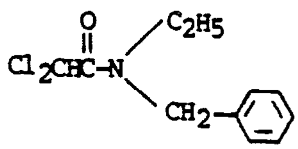 ; 2(b) 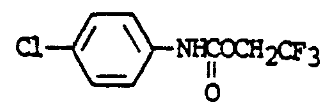 ;

3(b) 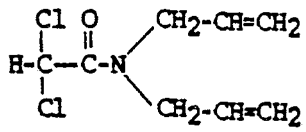 ; 4(b) 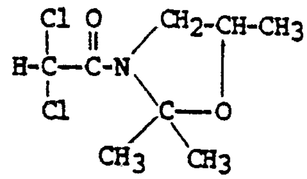 .

miteinander gemischt werden, wobei das Gewichtsverhältnis des Pyrrolidonherbizides zu Antidot im Bereich von 0,01 : 1 bis 30 : 1 liegt.

**Revendications**

1. Une composition comprenant:

(a) une quantité efficace d'herbicide consistant en un dérivé de pyrrolidone de formule:

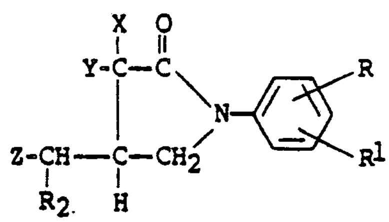

dans laquelle:

X représente un atome d'hydrogène, un atome de chlore ou un radical méthyle;

Y représente un atome d'hydrogène, un atome de chlore ou de brome;

Z représente un atome de chlore ou de brome;

R représente un atome d'hydrogène, un radical alkyle possédant de 1 à 4 atomes de carbone bornes comprises, un radical acétyle, un atome de chlore, de brome, de fluor, d'iode, un radical trifluorométhyle, un groupe nitro ou cyano, un radical alkoxy possédant de 1 à 4 atomes de carbone bornes comprises, un radical alkylthio possédant de 1 à 4 atomes de carbone bornes comprises, un radical alkylsulfinyle possédant de 1 à 4 atomes de carbone bornes comprises, un radical alkylsulfonyle possédant de 1 à 4 atomes de carbone bornes comprises, un radical trifluorométhylthio, trifluorométhylsulfinyle, trifluorométhylsulfonyle, pentafluoropropionamido ou 3-méthyluréido;

$R_1$ représente un atome d'hydrogène, un radical alkyle possédant de 1 à 4 atomes de carbone bornes comprises, un atome de chlore ou un radical trifluorométhyle; et

$R_2$ représente un radical alkyle possédant de 1 à 4 atomes de carbone bornes comprises, ou un atome d'hydrogène;

et

(b) une quantité efficace d'antidote non phytotoxique consistant en un composé présentant l'une des formules suivantes:

1(b) 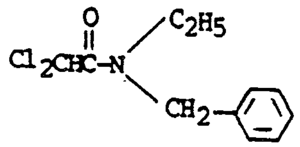 ; 2(b) 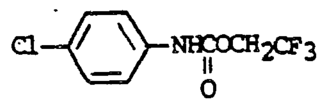 ;

3(b) 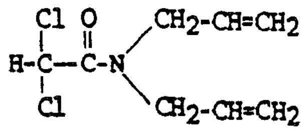 ; ou 4(b) 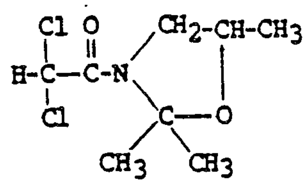 .

2. Une composition selon la revendication 1, dans laquelle X represénte un atome d'hydrogène, Y représente ou atome de chlore, Z représente un atome de chlore, R représente un radical m-trifluorométhyl, $R_1$ représente un atome d'hydrogène et $R_2$ représente un atome d'hydrogène.

3. Une composition selon la revendication 1 ou 2, dans laquelle le dérivé de pyrrolidone entre dans la formulation sous la forme d'un concentré émulsionnable.

4. Une composition selon l'une quelconque des revendications 1 ou 2, dana laquelle le dérivé de pyrrolidone entre dans la formulations sous la forme d'une microcapsule.

5. Une méthode de contrôle du développement d'une végétation indésirable et de réduction des dommages occasionnés à une culture par un herbicide à base de pyrrolidone, qui consiste à appliquer au lieu où l'on souhaite le contrôle du dévelopement une composition qui comprend:

(a) une quantité efficace d'herbicide consistant en un dérivé de pyrrolidone de formule:

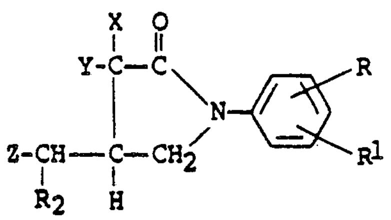

dans laquelle:

X représente un atome d'hydrogène, un atome de chlore ou un radical méthyle;

Y représente un atome d'hydrogène, un atome de chlore ou de brome;

Z représente un atome de chlore ou de brome;

R représente un atome d'hydrogène, un radical alkyle possédant de 1 à 4 atomes de carbone bornes comprises, un radical acétyle, un atome de chlore, de brome, de fluor, d'iode, un radical trifluorométhyle, un groupe nitro ou cyano, un radical alkoxy possédant de 1 à 4 atomes de carbone bornes comprises, un radical alkylthio possédant de 1 à 4 atomes de carbone bornes comprises, un radical alkylsulfinyle possédant de 1 à 4 atomes de carbone bornes comprises, un radical alkylsulfonyle possédant de 1 à 4 atomes de carbone bornes comprises, un radical trifluorométhylthio, thifluorométhylsulfinyle, trifluorométhylsulfonyle, pentafluoropropionamido ou 3-méthyluréido;

$R_1$ représente un atome d'hydrogène, un radical alkyle possédant de 1 à 4 atomes de carbone bornes comprises, un atome de chlore ou un radical trifluorométhyle; et

$R_2$ représente un radical alkyle possédant de 1 à 4 atomes de carbone bornes comprises, ou un atome d'hydrogène; et

(b) une quantité efficace d'antidote non phytotoxique consistant en un composé présentant l'une des formules suivantes:

1(b) 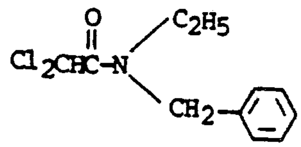 ; 2(b) 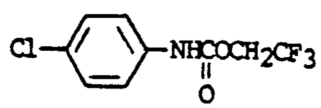 ;

3(b) 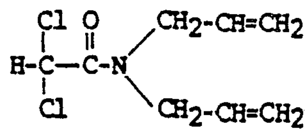 ; ou 4(b) 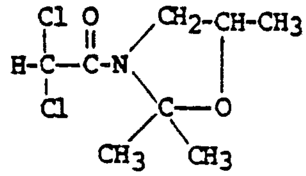 .

6. Une méthode selon la revendication 5, dans laquelle X représente un atome d'hydrogène, Y représente un atome de chlore, Z représente un atome de chlore, R représente un radical m-trifluorométhyle, $R_1$ représente un atome d'hydrogène et $R_2$ représente un atome d'hydrogène.

7. Une méthode selon l'une quelconque des revendications 5 ou 6, dans laquelle le dérivé de pyrrolidone entre dans la formulation sous la forme d'un concentré émulsionnable.

8. Une méthode selon l'une quelconque des revendications 5 ou 6, dans laquelle le dérivé de pyrrolidone entre dans la formulation sous la forme d'une microcapsule.

9. Un procédé de préparation d'une composition antidote d'herbicide consistant à mélanger:

(a) une quantité efficace d'herbicide consistant en un dérivé de pyrrolidone de formule:

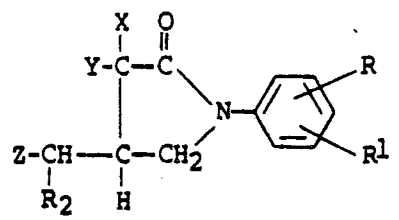

dans laquelle:

X représente un atome d'hydrogène, un atome de chlore ou un radical méthyle;

Y représente un atome d'hydrogène, un atome de chlore ou de brome;

Z représente un atome de chlore ou de brome;

R représente un atome d'hydrogène, un radical alkyle possédant de 1 à 4 atomes de carbone bornes comprises, un radical acétyle, un atome de chlore, de brome, de fluor, d'iode, un radical triflouorométhyle, un groupe nitro ou cyano, un radical alkoxy possédant de 1 à 4 atomes de carbone bornes comprises, un radical alkylthio possédant de 1 à 4 atomes de carbone bornes comprises, un radical alkylsulfinyle possédant de 1 à 4 atomes de carbone bornes comprises, un radical alklysulfonyle possédant de 1 à 4 atomes de carbone bornes comprises, un radical trifluorométhylthio, trifluorométhylsulfinyle, trifluorométhylesulfonyle, pentafluoropropionamido ou 3-méthyluréido;

$R_1$ représente un atome d'hydrogène, un radical alkyle possédant de 1 à 4 atomes de carbone bornes comprises, un atome de chlore ou un radical trifluorométhyle; et

$R_2$ représente un radical alkyle possédant de 1 à 4 atomes de carbone bornes comprises, ou un atome d'hydrogène; et

(b) une quantité efficace d'antidote non phytotoxique consistant en un composé présentant l'une des formules suivantes:

1(b) 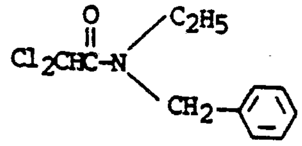 ; 2(b) 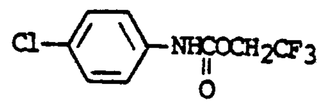 ;

3(b) 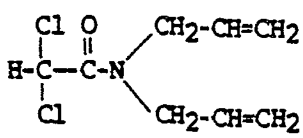 ; or 4(b) 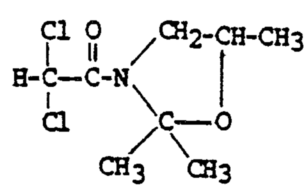 .

dans un rapport pondéral de l'herbicide à base de pyrrolidone à cet antidote compris entre 0,01/1 et 30/1.